Europäisches Patentamt

(19) European Patent Office

Office européen des brevets

(11) Veröffentlichungsnummer : **0 046 150 B1**

(12) **EUROPÄISCHE PATENTSCHRIFT**

(45) Veröffentlichungstag der Patentschrift :
30.12.86

(21) Anmeldenummer : 80104907.3

(22) Anmeldetag : 18.08.80

(51) Int. Cl.⁴ : **B 65 B 7/02**, B 65 B 51/22

(54) Verfahren und Vorrichtung zum Verschliessen eines Ventilsackes.

(43) Veröffentlichungstag der Anmeldung :
24.02.82 Patentblatt 82/08

(45) Bekanntmachung des Hinweises auf die Patenterteilung : 30.12.86 Patentblatt 86/52

(84) Benannte Vertragsstaaten :
AT BE CH FR GB IT LI NL SE

(56) Entgegenhaltungen :
EP-A- 0 001 015
AT-B- 224 540
DE-B- 1 087 074
DE-B- 2 310 604
DE-U- 1 838 664
US-A- 3 505 136
US-A- 4 066 108
Modern Packaging, Juli 1964, S. 98,99

(73) Patentinhaber : NATRONAG Gesellschaft für Verpackungssysteme mbH

3380 Goslar 1 (DE)

(72) Erfinder : Herda, Dieter, Ing. grad.
Ulmenweg 41
D-3200 Hildesheim (DE)
Erfinder : Büttner, Günter
Deilichstrasse 4
D-3388 Bad Harzburg 1 (DE)

(74) Vertreter : Gramm, Werner, Dipl.-Ing. et al
Patentanwälte Gramm + Lins Theodor-Heuss-Strasse 2
D-3300 Braunschweig (DE)

**Beschreibung**

Die Erfindung betrifft ein Verfahren zum Verschließen eines Ventilsackes mit einem Innenventil, das mit einer Schicht aus thermisch schweißbarem Material versehen ist, wobei zum Verschließen des Innenventils eine Wärmezufuhr auf die Schicht vorgenommen wird. Die Erfindung betrifft ferner eine Vorrichtung zur Durchführung des Verfahrens.

Seit vielen Jahren gehen Bestrebungen dahin, mit pulverförmigem oder körnigem Material gefüllte Säcke zuverlässig zu verschließen. Zu diesem Zweck sind eine Vielzahl von Ventilarten entwickelt worden, die einen möglichst guten Verschluß des Sackes begünstigen sollen. Durch die EP-A-1 015 ist ein Verfahren und eine Vorrichtung zum Verschließen von Außenventilen bekannt, die mit einem Heißschmelzkleber beschichtet sind. Die Schweißbacken ergreifen das Außenventil von unten und oben und führen bei der Druckausübung Wärme zu, die den Heißschmelzkleber klebend macht. Ist das Außenventil so kurz, daß es nicht über die Seitenwand des Ventilsackes herausragt, drückt die von unten an das Ventil herangeführte Schweißelektrode die Sackseitenwand etwas nach innen, um das kurze Außenventil unmittelbar zu ergreifen.

Durch die Zeitschrift Modern Packaging, Juli 1964, Seite 98, 99, ist es bekannt, einen oben offenen, also ohne oberen Boden ausgebildeten Sack mit entsprechend breiten Schweißbacken zu verschließen, wobei die Verschweißung durch Ultraschallübertragung bewirkt wird.

Da Innenventile nicht für die Schweißwerkzeuge ergreifbar ausgebildet sind, kam die Anwendung der bekannten Verfahren bei Ventilsäcken mit Innenventilen nicht in Betracht. Bei der Verwendung von Innenventilen beruhte die Verschlußwirkung daher im wesentlichen darauf, daß das Füllgut des Ventilsackes gegen das Innenventil drückt und dieses im zusammengepreßten Zustand hält, so daß möglichst kein Füllgut durch das Innenventil nach außen gelangen kann. Es zeigt sich jedoch in der Praxis, daß eine gute Verschlußwirkung der bekannten Innenventile nur bei bestimmten Füllmaterialien erreicht wird, während bei den übrigen Füllmaterialien ein mehr oder minder starkes Ausrieseln zu beobachten ist. Da dieses Ausrieseln insbesondere bei giftigen oder staubenden Füllgütern zu starken Belästigungen führt und sogar die Gefahr von gesundheitlichen Schäden birgt, sind auch Versuche unternommen worden, Innenventile besser zu verschließen. Das eingangs erwähnte Verfahren zum Verschließen eines Ventilsacks mit einem Innenventil ist durch die AT-B-224 540 bekannt. Das Innenventil wird hierbei durch einen Ventilschlauch aus einem schrumpffähigen Material gebildet. Durch Zuführen eines Wärmestoßes auf den Ventilschlauch schrumpft dieser, so daß die Ventilöffnung zumindest wesentlich verkleinert wird. Die Wärmeübertragung auf den Ventilschlauch kann durch einen Heißluftstoß oder durch an der Füllröhre angebrachte Heizelektroden erfolgen.

Durch die DE-U-1 838 664 ist die Verwendung eines Heißschmelzklebers bei Innenventilen bekannt. Das Innenventil ist bei dieser Schrift durch den Kreuzboden gebildet, auf den ringförmig eine Schicht mit dem Heißschmelzkleber aufgetragen wird. Die Art die Wärmezuführung ist in dieser Schrift nicht näher erläutert.

Der Erfindung liegt daher die Aufgabe zugrunde, ein Verfahren und eine Vorrichtung der eingangs erwähnten Art anzugeben, durch die ein vollständiger Verschluß von Ventilsäcken mit Innenventilen möglich ist.

Diese Aufgabe wird erfindungsgemäß mit einem Verfahren zum Verschließen eines Ventilsackes mit einem Innenventil, das mit einer Schicht aus thermisch schweißbarem Material versehen ist, wobei zum Verschließen des Innenventils eine Wärmezufuhr auf die Schicht vorgenommen wird, dadurch gelöst, daß das Ventil mittels Schweißelektroden durch Eindrücken des Sackes unterhalb des Ventils und Erzeugen eines Gegendruckes an der Oberseite des Sackes ergriffen und zusammengedrückt wird und das Ventil durch die so verformten Sackwandungen des Ventilsackes hindurch mit einer indirekten Erzeugung von Wärme in der Schicht verschweißt wird.

In einer überraschend einfachen Weise gelingt es mit dem erfindungsgemäßen Verfahren, die Ventilöffnung des Innenventils absolut dicht dadurch zu verschließen, daß die Ventilöffnung durch Schweißung geschlossen wird. Die Schweißung wird dabei durch die mittels der Elektroden verformten Sackwandungen hindurch ausgeführt, wobei mittels der Schweißbacken die Sackwandungen aus ihrer eigentlichen Kastenform heraus verformt werden.

In einer bevorzugten Ausführungsform wird ein Innenventil verwendet, bei dem beide zusammengedrückten Wände des Innenventils die schweißbare Schicht aufweisen. Beim Schweißvorgang verbinden sich die Schichten durch die plastische Verformung unter der Wärmeeinwirkung miteinander und bilden eine an sich bekannte Schweißnaht.

Das Schweißverfahren kann so durchgeführt werden, daß die verschweißte Schicht mit den Sackwänden verklebt. Die Schweißung beruht bekanntlich auf einer thermischen Plastifizierung des Kunststoffes. Durch die angedrückten Sackwände kann eine Verbindung zu diesen entstehen. Dadurch gestaltet sich der Schweißvorgang sehr unkritisch. Die bleibende Verformung des Sackes einer geschweißten Naht ist gering und tolerierbar.

Wenn jedoch eine Verklebung des Innenventils mit den Sackwänden vermieden werden soll, kann ein Innenventil verwendet werden, bei dem die verschweißbare Schicht mit einem Abdeckblatt aus Papier an der Oberseite und/oder Unterseite der Schicht umgeben ist. Dadurch wird erreicht, daß eine Verklebung maximal an einer Sackwandung entsteht oder aber ganz vermieden wird, wodurch jede mechanische Belastung der Schweißnaht durch die Verformung des Sackes entfällt. Statt des Abdeckblattes, das im übrigen bereits durch das übliche Einlegeblatt zur Befestigung des Innenventils an der Sackwandung gebildet sein kann, kann bei dem erfindungsgemäßen Verfahren auch ein Innenventil verwendet werden, das aus mit Kunststoff beschichtetem Papier besteht.

Für das erfindungsgemäße Verfahren eignen sich alle Schweißverfahren, die mit der indirekten Erzeugung von Wärme in dem Material zwischen den Schweißwerkzeugen arbeiten, wie z. B. Hochfrequenzschweißen oder Ultraschall-Schweißen. Für das erfindungsgemäße Verfahren ist es vorteilhaft, wenn die Verschweißung mit Ultraschall durchgeführt wird, weil dadurch ein besonderer Effekt erzielt wird. Durch die Ultraschallwellen wird der Bereich zwischen den Schweißwerkzeugen gereinigt, was offensichtlich dadurch erfolgt, daß die Schmutzteilchen unter dem Einfluß der Ultraschallwellen aus dem Schweißbereich hinauswandern. Obwohl also die Ventilöffnung beim Befüllen im allgemeinen mit Füllgut teilweise bedeckt ist, läßt sich mit dem Ultraschall-Schweißen eine besonders saubere und daher besonders sichere Abdichtung der Ventilöffnung durchführen.

Zur Erhöhung der Sicherheit des Verschlusses der Ventilöffnung können mehrere Verschweißungen gleichzeitig oder nacheinander durchgeführt werden.

Die o. g. Aufgabe wird ferner gelöst durch eine Vorrichtung zur Durchführung des Verfahrens, die gekennzeichnet ist durch einen eine Lösungsbewegung der Ventilöffnung von dem Füllrohr erlaubenden Sackstuhl, durch eine an der Füllmaschine angebrachte, unterhalb der Ventilöffnung gegen eine Schmalseite des Sackes bewegbare erste Schweißelektrode und durch eine gegen die Oberseite des Sackes bewegbare zweite Schweißelektrode, wobei die Breiten der Schweißelektroden die Breite des Füllrohres übersteigen und die Schweißelektroden zur indirekten Wärmeerzeugung in der schweißbaren Schicht des Innenventils ausgelegt sind.

Dabei kann der Sackstuhl im wesentlichen horizontal verfahrbar oder nach Art einer Walze ausgebildet sein, über die der Sack nach dem Befüllen abkippen kann und dann gegen ein Leitblech anliegt. In beiden Fällen wird die der Füllmaschine zugewandte Seite des Sackes in der Höhe der Ventilöffnung um ein gewisses Stück von dem Füllrohr entfernt. In dieser Stellung greift die erste Schweißelektrode unter Verformung der Sackwandung unter die mit der Schicht versehene Ventilöffnung, und die zweite Schweißelektrode fährt gegen die untere, erste Schweißelektrode, wodurch die Schicht und die betreffenden Teile der Sackwände aneinander gepreßt werden. In dieser Position wird das Schweißgerät eingeschaltet und die Verschweißung der Ventilöffnung durchgeführt.

Die Verformung des Sackes unterhalb der Ventilöffnung ist unproblematisch, da der übliche Füllgrad von Säcken eine derartige Größe aufweist, daß nach dem Befüllen des Sackes der obere Bereich nicht gefüllt ist, so daß die Verformung nicht gegen den Widerstand des Füllgutes erfolgen muß.

Die erste Schweißelektrode kann vorzugsweise flächig ausgebildet sein und mit einer Schmalseite in die Sackwandung unterhalb des Innenventils mit einer im wesentlichen horizontalen Verschiebung drücken. In einer alternativen Ausführungsform kann die Schweißelektrode mit einer schmalen Kante unter einem spitzen Winkel von unten in die Sackwandung drücken. Bei einem zum Verschweißen schräggestellten Sack kann die erste Schweißelektrode dabei nahezu senkrecht auf die Ventilöffnung treffen.

Wenn zumindest eine der Schweißelektroden eine spitz zulaufende Kante aufweist, wird eine sichere Schweißung auch dann erreicht, wenn die mit der Schicht versehene Stelle mit Füllgut bedeckt ist, also z. B. das Innenventil noch ganz oder teilweise gefüllt ist. Durch die spitz zulaufende Kante wird das Füllgut von der Schweißstelle verdrängt, so daß auch unter diesen Bedingungen eine einwandfreie Schweißnaht entsteht. Eine zusätzliche Reinigung kann — wie oben beschrieben — durch die Verwendung des Ultraschall-Schweißverfahrens erreicht werden.

Die Erfindung soll im folgenden anhand eines in der Zeichnung dargestellten Ausführungsbeispiels näher erläutert werden. Es zeigen :

Figur 1 eine schematische Darstellung des Schweißvorganges eines Innenventils eines gefüllten Sackes an einer Füllmaschine mit einem Sackstuhl, der ein Abkippen des Sackes gestattet

Figur 2 eine der Figur 1 entsprechende Darstellung, jedoch mit einem verschiebbaren Sackstuhl

Figur 3 eine der Figur 1 entsprechende Darstellung, jedoch mit einer Variante der Schweißelektroden

Figur 4 eine Detaildarstellung eines Innenventils mit einem das Ventil umgebenden Abdeckblatt aus Papier.

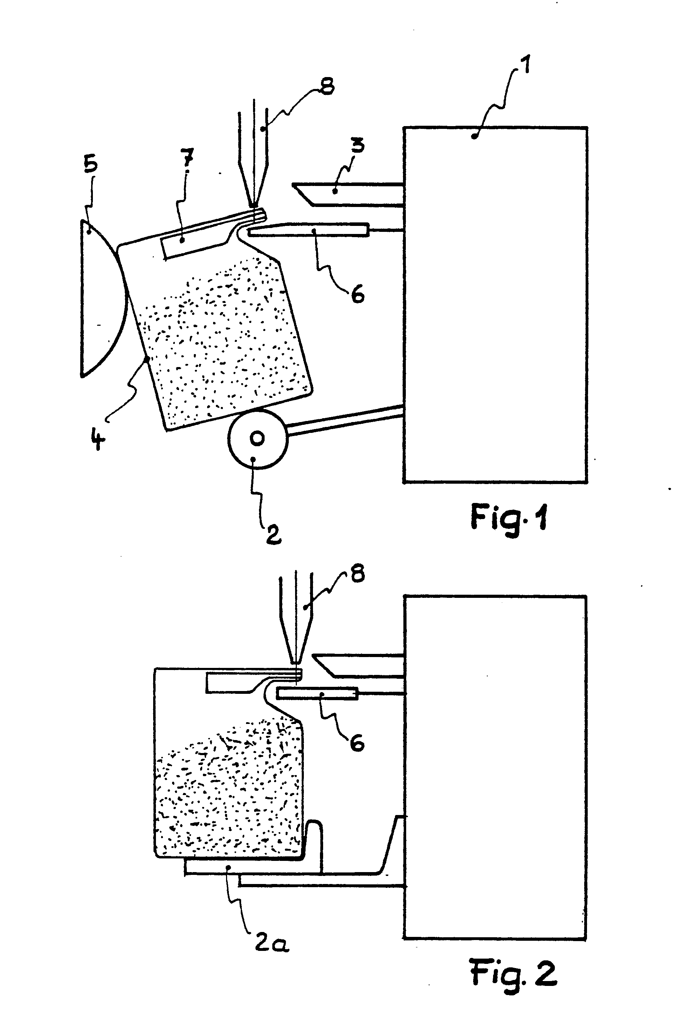

In Figur 1 ist eine Sackfüllmaschine 1 dargestellt, die einen Sackstuhl 2 und ein Füllrohr 3 aufweist. Der Sackstuhl 2 ist walzenförmig ausgebildet, wobei zwei Walzen nach innen verjüngt sein können, um eine Führung des Sackes zu gewährleisten. Der über den Sackstuhl 2 abgekippte Sack 4 liegt an einem Leitblech 5 an, wodurch er eine stabile Position für den Schweißvorgang einnimmt. An der Sackfüllmaschine 1 ist eine erste Schweißelektrode 6 verschiebbar befestigt, die gegen die zur Füllmaschine 1 gerichtete Sackwandung verfahrbar ist und die Sackwandung unterhalb eines Innenventils 7 eindrückt. In vertikaler Richtung ist eine zweite Schweißelektrode 8 auf die Oberseite des Sackes verfahrbar und findet in der unterhalb des Innenventils 7 eingefahrenen ersten Schweißelektrode 6 ein Widerlager. Durch die aufeinander verfahrbaren Schweißelektroden 6, 8 werden die Innenwandungen des Innenventils 7 gegeneinander gepreßt. Die Schweißelektroden 6, 8 sind mit einem nicht dargestellten Generator verbunden und erzeugen zwischen sich beispielsweise Ultraschallwellen. Dadurch wird das zwischen den Schweißelektroden 6, 8 befindliche Material erwärmt und der thermoplastische Kunststoff beginnt sich plastisch zu verformen, wodurch sich die gegeneinanderliegenden Innenwände des Innenventils miteinander verbinden und das Innenventil 7 verschließen.

Die in Figur 2 dargestellte Vorrichtung unterscheidet sich von der Vorrichtung in Figur 1 nur durch den Sackstuhl 2a, der horizontal verfahrbar ist und die Trennung des Innenventils 7 von dem Füllrohr 3 durch horizontale Verschiebung ermöglicht.

Figur 3 zeigt eine andere Elektrodenanordnung, wobei die erste Schweißelektrode 6′ in einem spitzen Winkel von unten in die Sackwandung einfährt und nahezu senkrecht gegen das Innenventil 7 des schräggestellten Sackes 4 stößt. In entsprechender Weise ist die obere, zweite Schweißelektrode 8′ aus der Vertikalen geneigt angeordnet. Diese Anordnung der Elektroden 6′, 8′ eignet sich insbesondere für eine Verschwenkung der Elektroden, d. h. für eine Anlenkung an einem Drehgelenk.

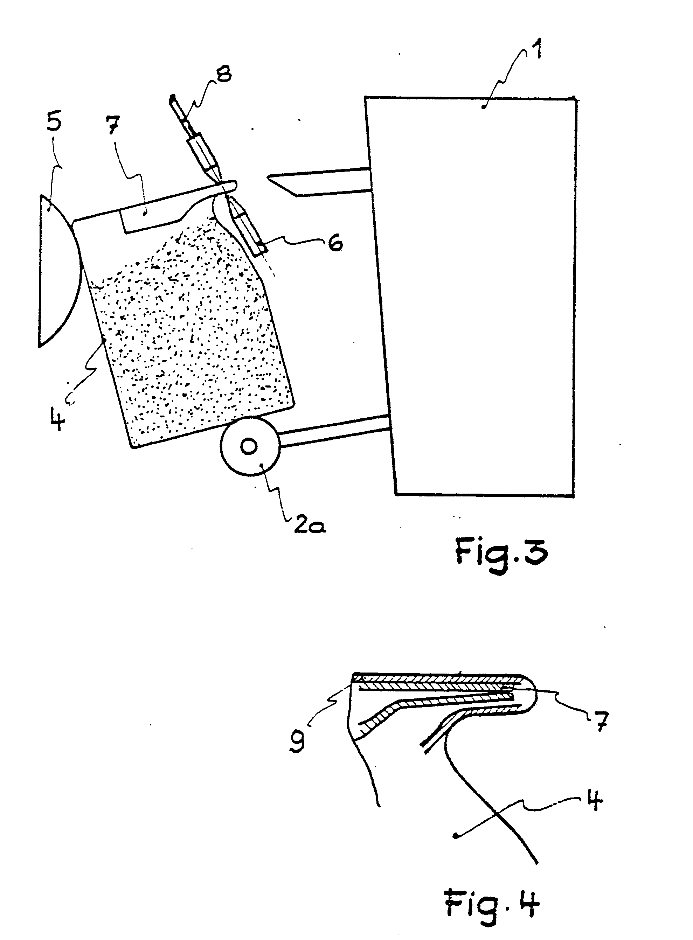

Figur 4 verdeutlicht den Aufbau eines Innenventils 7, das durch eine Papierschicht 9 gegenüber den Wandungen des Sackes 4 abgeschirmt ist, so daß ein Verkleben des Innenventils 7 mit diesen Wandungen vermieden wird. Die Verklebung kann nun höchstens zwischen dem Innenventil 7 und der Papiereinlage 9 erfolgen, nicht aber mit den Wandungen des Sackes 4.

Das Innenventil kann aus einem Schlauch aus thermoplastischem Material gebildet sein. Es kann jedoch auch zweilagig aufgebaut sein, wobei die Papierschicht 9 die Außenlage des Innenventils bilden kann. Die Papierschicht kann mit dem Innenventil 7 durch punktweise oder teilweise Klebung verbunden sein.

Das erfindungsgemäße Verfahren ist auf keine spezielle Sackart beschränkt, wenngleich es vorzugsweise für die Verwendung bei Papiersäcken vorgesehen ist. Es ist jedoch auch möglich, die Verwendung bei Kunststoffsäcken vorzunehmen. Bei dem Schweißvorgang entsteht an der Außenwandung des Kunststoffsackes 4 ebenfalls eine Schweißnaht, die aber nicht störend ist. Wenn eine Verklebung der Außenwandung mit dem Innenventil 7 vermieden werden soll, müssen in diesem Fall zwei Papierlagen 9 vorgesehen werden, da sonst sowohl die Sackwandung als auch das Innenventil 7 mit der Papierschicht verkleben kann, so daß ein nicht gewünschter fester Zusammenhalt zwischen Innenventil und Sackwandung entsteht. Bei zwei Papierlagen verklebt die innere Papierlage mit dem Innenventil 7, die äußere Papierlage mit der Sackwandung.

**Patentansprüche**

1. Verfahren zum Verschließen eines Ventilsackes (4) mit einem Innenventil (7), das mit einer Schicht aus thermisch schweißbarem Material versehen ist, wobei zum Verschließen des Innenventils (7) eine Wärmezufuhr auf die Schicht vorgenommen wird, dadurch gekennzeichnet, daß das Ventil (7) mittels Schweißelektroden (6, 8) durch Eindrücken des Sackes (4) unterhalb des Ventils (7) und Erzeugen eines Gegendruckes an der Oberseite des Sackes (4) ergriffen und zusammengedrückt wird und das Ventil (7) durch die so verformten Sackwandungen des Ventilsackes (7) hindurch mit einer indirekten Erzeugung von Wärme in der Schicht verschweißt wird.

2. Verfahren nach Anspruch 1, dadurch gekennzeichnet, daß die Schweißdauer so eingestellt wird, daß die verschweißte Schicht auch mit den Sackwänden verklebt.

3. Verfahren nach Anspruch 1 oder 2, dadurch gekennzeichnet, daß die Verschweißung mit Ultraschall durchgeführt wird.

4. Verfahren nach einem der Ansprüche 1 bis 3, dadurch gekennzeichnet, daß mehrere Verschweißungen der Schicht gleichzeitig oder nacheinander durchgeführt werden.

5. Verfahren nach einem der Ansprüche 1 bis 4, dadurch gekennzeichnet, daß ein Innenventil (7) verwendet wird, bei dem beide zusammengedrückten Wände des Innenventils (7) die schweißbare Schicht aufweisen.

6. Verfahren nach einem der Ansprüche 1 oder 3 bis 5, gekennzeichnet durch die Verwendung eines Innenventils (7), bei dem die Schicht mit einem Abdeckblatt (9) aus Papier an der Oberseite und/oder Unterseite der Schicht umgeben ist.

7. Verfahren nach einem der Ansprüche 1 oder 3 bis 5, gekennzeichnet durch die Verwendung eines mit der verschweißbaren Schicht, insbesondere aus thermoplastischem Kunststoff, beschichteten Innenventils (7) aus Papier.

8. Vorrichtung zur Durchführung des Verfahrens nach einem der Ansprüche 1 bis 7, gekennzeichnet durch einen eine Lösungsbewegung der Ventilöffnung von dem Füllrohr (3) erlaubenden Sackstuhl (2, 2a), durch eine an der Füllmaschine (1) angebrachte, unterhalb der Ventilöffnung (7) gegen eine Schmalseite des Sackes (4) bewegbare erste Schweißelektrode (6, 6′) und durch eine gegen die Oberseite des Sackes (4) bewegbare zweite Schweißelektrode (8, 8′), wobei die Breiten der Schweißelektroden (6, 6′; 8, 8′) die Breite des Füllrohres (3) übersteigen und die Schweißelektroden zur indirekten Wärmeerzeugung in der schweißbaren Schicht des Innenventils (7) ausgelegt sind.

9. Vorrichtung nach Anspruch 8, dadurch gekennzeichnet, daß der Sackstuhl (2a) im wesentlichen horizontal verfahrbar ist.

10. Vorrichtung nach Anspruch 8, dadurch gekennzeichnet, daß der Sackstuhl (2) in der Art einer Walze gebildet ist, über die der Sack (4) nach dem Befüllen abkippen kann und dann gegen ein Leitblech (5) anliegt.

11. Vorrichtung nach einem der Ansprüche 8 bis 10, dadurch gekennzeichnet, daß die erste Schweißelektrode (6) flächig ausgebildet ist und mit einer Schmalseite in die Sackwandung unterhalb der Ventilöffnung mit einer im wesentlichen horizontalen Verschiebung drückt.

12. Vorrichtung nach einem der Ansprüche 8 bis 10, dadurch gekennzeichnet, daß die erste Schweißelektrode (6') mit einer schmalen Kante unter einem spitzen Winkel von unten in die Sackwandung drückt.

13. Vorrichtung nach Anspruch 12, dadurch gekennzeichnet, daß bei einem schräggestellten Sack (4) die erste Schweißelektrode (6') nahezu senkrecht auf die schweißbare Schicht des Innenventils (7) trifft.

14. Vorrichtung nach einem der Ansprüche 8 bis 13, dadurch gekennzeichnet, daß mindestens eine der Schweißelektroden (6, 6' ; 8, 8') eine spitz zulaufende Kante aufweist.

## Claims

1. Method for closing a valve bag (4) having an inside valve (7) provided with a layer from thermally sealable material, wherein a heat transfer is performed to the layer for closing the inside valve (7), characterized in that the valve (7) is grasped and pressed together by means of sealing electrodes (6, 8) caving into the bag (4) beneath the valve (7) and producing a counterpressure at the top side of the bag (4) and that the valve (7) is sealed through the bag walls of the valve bag (4) deformed in the described way by indirectly producing the heat in the layer.

2. Method according to claim 1, characterized in that the sealing time is set so that the sealed layer is also fixed to the bag walls.

3. Method according to claim 1 or 2, characterized in that the sealing is performed by ultrasonic waves.

4. Method according to one of the claims 1 to 3, characterized in that a multiple of sealings of the layer are performed simultaneously or one after another.

5. Method according to one of the claims 1 to 4, characterized in that an inside valve (7) is used, both walls of which being pressed together are provided with the sealable layer.

6. Method according to one of the claims 1 or 3 to 5, characterized by the use of an inside valve (7) the layer of which is covered at the top and/or bottom side by a cover sheet (9) made from paper.

7. Method according to one of the claims 1 or 3 to 5, characterized by the use of an inside valve (7) made from paper coated with the sealable layer, especially from thermoplastics.

8. Device for carrying out the process according to one of the claims 1 to 7, characterized by a bag chair (2, 2a) allowing a detachment movement of the valve mouth from the filling tube (3), a first sealing electrode (6, 6') mounted at the bag packer (1) and being movable against a smaller side of the bag (4) below the valve mouth (7) and by a second sealing electrode (8, 8') movable against the top side of the bag (4), wherein the widths of the sealing electrodes (6, 6' ; 8, 8') exceed the width of the filling tube (3) and the sealing electrodes (6, 6' ; 8, 8') are provided for indirect heat generation in the sealable layer of the inside valve (7).

9. Device according to claim 8, characterized in that the bag chair (2) is movable essentially in horizontal direction.

10. Device according to claim 8, characterized in that the bag chair (2) is formed as a roll, around which the bag (4) can tilt after filling and then lean against a guide plate (5).

11. Device according to one of the claims 8 to 10, characterized in that the first sealing electrode (6) is flat and presses with a narrow side against the bag wall below the valve mouth by a substantially horizontal movement.

12. Device according to one of the claims 8 to 10, characterized in that the first sealing electrode (6') presses from below under an acute angle into the bag wall with a narrow edge.

13. Device according to claim 12, characterized in that the first sealing electrode (6') meets the sealable layer of the inside valve (7) in a nearly perpendicular direction, when the bag (4) is tilted.

14. Device according to one of the claims 8 to 13, characterized in that at least one of the sealing electrodes (6, 6' ; 8, 8') is provided with a tapered edge.

## Revendications

1. Procédé pour fermer un sac à valve (4) comportant une valve interne (7) qui est pourvue d'une couche de matériau thermiquement soudable, dans lequel procédé, pour fermer la valve interne (7), on procède à un apport de chaleur sur la couche, caractérisé en ce que, au moyen d'électrodes de soudage (6, 8), on saisit et on comprime la valve (7) par enfoncement du sac (4) en dessous de la valve (7) et par production d'une contre-pression sur la face supérieure du sac (4) ; et en ce que l'on soude la valve (7) à travers les parois, ainsi déformées, du sac à valve (7) avec production indirecte de chaleur dans la couche.

2. Procédé selon la revendication 1, caractérisé en ce que l'on règle la durée de soudage de façon que la couche soit également collée aux parois du sac.

3. Procédé selon la revendication 1 ou 2, caractérisé en ce que l'on réalise la soudure par ultrasons.

4. Procédé selon l'une des revendications 1 à 3, caractérisé en ce que l'on réalise simultanément ou successivement plusieurs soudures de la couche.

5. Procédé selon l'une des revendications 1 à 4, caractérisé en ce que l'on emploie une valve interne (7) dans laquelle les deux parois, comprimées ensemble, de la valve interne (7) présentent la couche soudable.

6. Procédé selon l'une des revendications 1 ou 3 à 5, caractérisé par l'emploi d'une valve interne (7) dans laquelle la couche est recouverte d'une feuille de papier (9) sur la face supérieure et/ou la face inférieure de la couche.

7. Procédé selon l'une des revendications 1 ou 3 à 5, caractérisé par l'emploi d'une valve interne (7) en papier recouverte de la couche soudable, en particulier en matière synthétique thermoplastique.

8. Appareil pour la mise en œuvre du procédé selon l'une des revendications 1 à 7, caractérisé par un support de sac (2, 2a) permettant un mouvement qui détache l'ouverture de la valve d'avec le tube de remplissage (3), par une première électrode de soudage (6, 6') montée sur la machine d'ensachage (1) et mobile vers un petit côté du sac (4) en dessous de l'ouverture de la valve (7) et par une seconde électrode de soudage (8, 8') mobile vers le côté supérieur du sac (4), la largeur des électrodes de soudage (6, 6' ; 8, 8') étant supérieure à celle du tube de remplissage (3) tandis que les électrodes de soudage sont conçues pour produire indirectement de la chaleur dans la souche soudable de la valve (7).

9. Appareil selon la revendication 8, caractérisé en ce que le support de sac (2a) est mobile en direction sensiblement horizontale.

10. Appareil selon la revendication 8, caractérisé en ce que le support de sac (2) a la forme d'un rouleau sur lequel le sac (4) peut basculer après remplissage et s'appuie alors contre une tôle de guidage (5).

11. Appareil selon l'une des revendications 8 à 10, caractérisé en ce que la première électrode de soudage (6) est de configuration plane et appuie, par un petit côté, sur la paroi du sac en dessous de l'ouverture de la valve en se déplaçant de façon sensiblement horizontale.

12. Appareil selon l'une des revendications 8 à 10, caractérisé en ce que la première électrode de soudage (6') appuie par une arête étroite sur la paroi du sac, par dessous, sous un angle aigu.

13. Appareil selon la revendication 12, caractérisé en ce que, avec un sac (4) en position oblique, la première électrode de soudage (6') arrive presque perpendiculairement sur la souche soudable de la valve interne (7).

14. Appareil selon l'une des revendications 8 à 13, caractérisé en ce que l'une au moins des électrodes de soudage (6, 6' ; 8, 8') présente une arête effilée.

Fig. 1

Fig. 2

Fig.3

Fig.4